# EUROPÄISCHE PATENTSCHRIFT

(11) **EP 3 788 268 B1**
(45) Veröffentlichungstag und Bekanntmachung des Hinweises auf die Patenterteilung: **22.11.2023**
(21) Anmeldenummer: 19722784.6
(22) Anmeldetag: 16.04.2019
(51) Int. Cl.: F16D 3/70, F16D 3/48, H02K 11/21, F16D 1/10, F16D 1/05, F16D 3/56

(54) **KUPPLUNG FÜR EINEN ELEKTROMOTOR UND ELEKTROMOTOR MIT EINER KUPPLUNG ZWISCHEN DER ROTORWELLE UND DER WELLE EINES WINKELSENSORS**
COUPLING FOR AN ELECTRIC MOTOR AND ELECTRIC MOTOR WITH A COUPLING BETWEEN THE ROTOR SHAFT AND THE SHAFT OF AN ANGLE SENSOR
ACCOUPLEMENT POUR UN MOTEUR ÉLECTRIQUE ET MOTEUR ÉLECTRIQUE AVEC UN ACCOUPLEMENT ENTRE L'ARBRE DU ROTOR ET L'ARBRE D'UN CAPTEUR D'ANGLE

(30) Priorität: 03.05.2018 DE 102018003545
(43) Veröffentlichungstag der Anmeldung: 10.03.2021
(73) Patentinhaber: SEW-EURODRIVE GmbH & Co. KG, 76646 Bruchsal (DE)
(72) Erfinder: DREXLER, Mario, 76698 Ubstadt-Weiher (DE); RIEGER, Florian, 76227 Karlsruhe (DE)
(86) Internationale Anmeldenummer: PCT/EP2019/025105
(87) Internationale Veröffentlichungsnummer: WO 2019/211000

(56) Entgegenhaltungen:
- DE-A1- 3 740 061
- DE-A1- 10 006 223
- DE-A1-102005 009 607
- DE-A1-102008 028 603
- DE-A1-102010 054 510
- JP-A- H09 264 330
- US-A- 57 771
- US-A- 939 829
- US-A- 1 482 097
- US-A- 3 304 743

## Beschreibung

Die Erfindung betrifft einen Elektromotor mit Rotorwelle, Winkelsensor und Kupplung.

Es ist allgemein bekannt, dass eine Kupplung zur Durchleitung von Drehmoment zwischen zwei Wellen vorgesehen ist.

**Aus der** US 57 771 A **ist** eine Kupplung mit zwei Kupplungsteile und einem Zwischenteil, die durch axial ausgerichteten Schrauben oder Bolzen zusammengehalten werden, bekannt.

**Aus der** US 1 482 097 A **ist eine flexible Kupplung** für kleine Elektromotoren mit zwei Kupplungsteilen und einem mit diesen in Umfangsrichtung formschlüssig verbundenen Zwischenteil, das als Scheibe mit in Ausnehmungen aufgenommenen Bolzen ausgebildet ist, **bekannt.**

**Aus der** US 3 304 743 A **ist eine elastische Kupplung** bekannt, wobei zwischen zwei Kupplungsteilen als Zwischenteil eine Scheibe mit in Ausnehmungen (10) aufgenommenen Bolzen (9) angeordnet ist. Zwischen den Ausnehmungen im Kragenbereich des jeweiligen Kupplungsteils und den Bolzen sind Aufnahmen aus einem Elastomer befestigt.

**Aus der** DE 100 06 223 A1 **ist eine Vorrichtung zur Befestigung von Drehzahlmessern bekannt.**

**Aus der** DE 37 40 061 A1 ist, als nächstliegender Stand der Technik, ein Elektromotor bekannt, wobei eine Kupplung mit einem zwischen zwei Kupplungsteilen angeordneten Zwischenteil zwischen einer Motorwelle und einem Drehzahlmesser angeordnet ist.

**Aus der** DE 10 2010 054 510 A1 **ist eine Wellenkupplung** zum drehsteifen Verbinden der Geberwelle eines Drehgebers mit der Motorwelle eines Motors eines Servoantriebs **bekannt.** Der Antrieb weist einen Elektromotor und einem Winkelsensor auf, wobei ein Rotor des **Aus der** DE 10 2005 009 607 A1 **ist ein Verfahren zur Überwachung eines Antriebs bekannt.**

Winkelsensors kraftschlüssig und formschlüssig lösbar mit einem Rotor des Motors verbunden ist.

**Aus der** DE 10 2008 028 603 A1 **ist ein Elektromotor** mit einer zwischen einer Bremse und einem Sensor angeordneten Kupplung **bekannt.**

Der Erfindung liegt daher die Aufgabe zugrunde, ein Elektromotor mit einer Kupplung weiterzubilden, wobei eine wellenzentrische Verbindung ermöglicht sein soll.

Erfindungsgemäß wird die Aufgabe bei dem Elektromotor nach den in Anspruch 1 angegebenen Merkmalen gelöst.

Von Vorteil ist dabei, dass die Kupplungsteile an Rotorwelle und Sensorwelle, wellenzentrisch anbindbar sind. Zum Beispiel ist der Außenkonus des ersten Kupplungsteils in einen innenkonusförmigen Bereich eingeführt und das Außengewinde in ein Innengewinde der Rotorwelle eingeschraubt. Ebenso ist ein Außenkonus der Sensorwelle

in den innenkonusförmigen Bereich des zweiten Kupplungsteils eingeführt und angelegt, so dass eine Zentrierung in einfacher Weise ermöglicht ist. Dabei ist das Außengewinde einer durch die als Hohlwelle ausgeführten Welle durchgeführten Schraube in das Innengewinde des Wellenteils einschraubbar.

Somit sind die Kupplungsteile wellenzentrisch angebunden und das Zwischenteil ist zum Abdämpfen von Stößen oder Drehmomentrucken vorgesehen. Auf diese Weise ist die Winkelerfassung eines über die Kupplung mit der Rotorwelle drehfest verbundenen Winkelsensors mit hoher Qualität erfassbar.

Erfindungsgemäß ist das Zwischenteil als Scheibe mit axial durchgehenden Ausnehmungen gefertigt.

Bei einer vorteilhaften Ausgestaltung sind die Ausnehmungen jeweils auf demselben Radialabstand angeordnet sind und in Umfangsrichtung voneinander regelmäßig beabstandet sind.

Bei einer vorteilhaften Ausgestaltung ist die Scheibe als Zylinderscheibe ausgeführt, deren Zylinderachse koaxial zur Drehachse der Rotorwelle oder Welle ausgerichtet ist. Von Vorteil ist dabei, dass eine einfache Herstellung des Zwischenteils ermöglicht ist. Nach Einpressen der Bolzen in das Zwischenteil ist somit unter Verwendung einfacher Teile eine komplexe Struktur als Zwischenteil hergestellt.

Bei einer vorteilhaften Ausgestaltung weist das Zwischenteil eine diskrete Drehsymmetrie auf, insbesondere um die Drehachse eines der Kupplungsteile, der Rotorwelle und/oder der Sensorwelle aufweist. Von Vorteil ist dabei, dass das Zwischenteil ausgewuchtet ist, insbesondere also keine wesentliche Unwucht aufweist.

Erfindungsgemäß sind axial ausgerichtete Bolzen durch die Ausnehmungen des Zwischenteils gesteckt und ragen axial beidseitig aus dem Zwischenteil heraus. Von Vorteil ist dabei, dass eine einfache Herstellung durch Einpressen der Bolzen in die Ausnehmungen erreichbar ist.

Erfindungsgemäß weist jedes der Kupplungsteile einen jeweiligen Kragenbereich auf, wobei der jeweilige Kragenberiech am jeweiligen Kupplungsteil radial hervorsteht, wobei die Bolzen in die Ausnehmungen zumindest teilweise hineinragen. Von Vorteil ist dabei, dass die Bolzen geringen Kräften ausgesetzt sind. Somit ist ein großer Radialabstand der Bolzen trotz des erhöhten Trägheitsmoments der Kupplung von Vorteil, da die Kupplung ein großes Drehmoment durchleitbar macht.

Bei einer vorteilhaften Ausgestaltung sind die Kragenbereiche ringscheibenartig ausgeformt, insbesondere wobei die Ausnehmungen in den radial hervorstehenden Kragenbereichen auf jeweils gleichem Radialabstand und in Umfangsrichtung regelmäßig voneinander beabstandet sind, insbesondere wobei der Radialabstand großer ist als der größte Radialabstand eines Außenkonus des ersten Kupplungsteils und als der größte Radialabstand eines Außengewindes des ersten Kupplungsteils. Von Vorteil ist dabei, dass eine einfache Herstellung ermöglicht ist.

Bei einer vorteilhaften Ausgestaltung sind die Bolzen zylindrisch geformt. Von Vorteil ist dabei, dass eine einfache Herstellung ermöglicht ist.

Erfindungsgemäß sind zumindest die in die Ausnehmungen des jeweiligen Kragenbereichs hineinragende Oberflächenbereiche der Bolzen mit einer Kunststoffschicht, insbesondere PEEK-Schicht oder Teflonschicht, überzogen, wobei die Bolzen und/oder das Zwischenteil aus Stahl gefertigt sind. Von Vorteil ist dabei, dass das Zwischenteil mit den Bolzen ein Abdämpfen von Drehmomentrucken, Querkraftstößen oder axial wirkenden Stößen ermöglicht. Bei Versagen der Kunststoffschicht bleiben die Bolzen noch im Eingriff mit den Kragenbereichen, wobei dieser Eingriff dann spielbehaftet ist.

Bei dem erfindungsgemäßen Elektromotor mit Rotorwelle, Winkelsensor und Kupplung ist das erste Kupplungsteil mit der Rotorwelle drehfest verbunden und webeidas zweite Kupplungsteil mit der Sensorwelle des Winkelsensors drehfest verbunden.

Von Vorteil ist dabei, dass die Winkelerfassung in hoher Präzision ermöglicht ist und der Winkelsensor geschützt ist vor über die Rotorwelle herangeleiteten Stößen, Rucken oder dergleichen.

Bei einer vorteilhaften Ausgestaltung weist der Elektromotor eine elektromagnetisch betätigbare Bremse auf,
wobei ein Bremsbelagträger mit der Rotorwelle drehfest, aber axial verschiebbar verbunden ist,
wobei in einem Magnetkörper eine mit einem elektrischen Strom beaufschlagbare Wicklung, insbesondere Ringwicklung, aufgenommen ist,
wobei zwischen Bremsbelagträger und Wicklung eine mit dem Magnetkörper drehfest verbundene, aber axial verschiebbare Ankerscheibe, insbesondere ferromagnetische Ankerscheibe, angeordnet ist,
wobei ein am Magnetkörper abgestütztes Federteil die Ankerscheibe zum Bremsbelagträger hin drückt,

insbesondere so dass bei Bestromung der Wicklung die Ankerscheibe entgegen der Federkraft zur Wicklung und/oder zum Magnetkörper hingezogen wird und bei Nichtbestromung der Wicklung die Ankerscheibe auf den Bremsbelagträger drückt, so dass der Bremsbelagträger auf eine auf der von der Ankerscheibe abgewandten Seite des Bremsbelagträgers angeordnete Bremsfläche gedrückt wird. Von Vorteil ist dabei, dass bei Stromausfall die Bremse einfällt. Somit ist bei Montage der Kupplung die Bremse eingefallen und fungiert als Mittel zum Gegenhalten beim Einschrauben des ersten Kupplungsteils in die Rotorwelle.

Bei einer vorteilhaften Ausgestaltung ist die Kupplung zwischen der Bremse und dem Sensor angeordnet. Von Vorteil ist dabei, dass der Sensor geschützt wird vor Querkraftstößen und/oder Drehmomentrucken.

Weitere Vorteile ergeben sich aus den Unteransprüchen.

Die Erfindung wird nun anhand von schematischen Abbildungen näher erläutert:

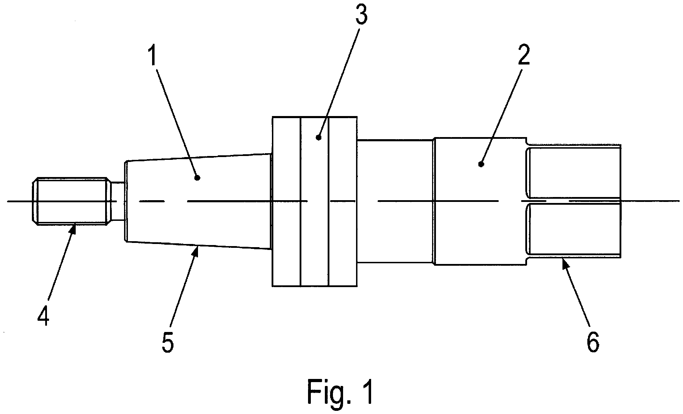

In der Figur 1 ist eine Seitenansicht auf eine erfindungsgemäße Kupplung dargestellt.

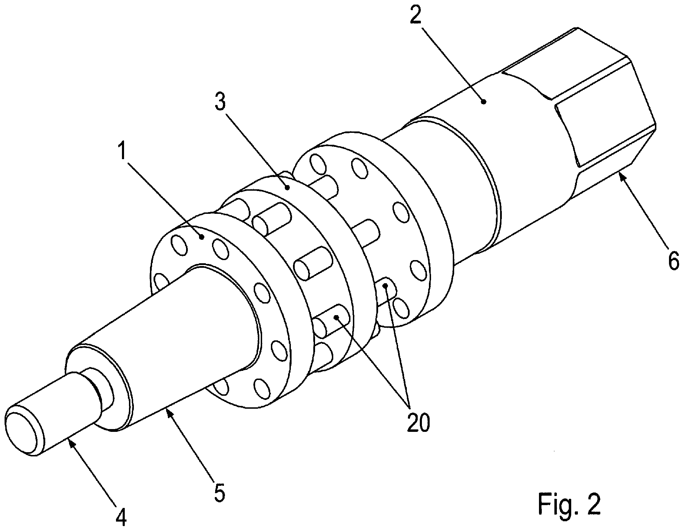

In der Figur 2 ist eine explodierte Darstellung der Kupplung in Schrägansicht dargestellt.

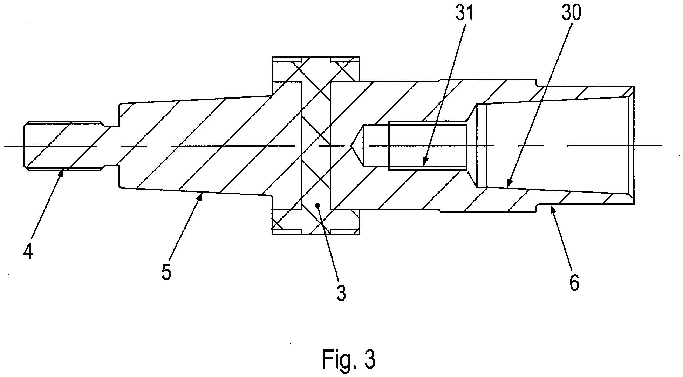

In der Figur 3 ist ein Längsschnitt durch die Kupplung dargestellt.

Wie in den Figuren dargestellt, weist die Kupplung ein erstes Kupplungsteil 1 zur drehfesten Verbindung mit einer Rotorwelle eines Elektromotors eines Getriebemotors auf und ein zweites Kupplungsteil 2 zur drehfesten Verbindung mit einer Sensorwelle eines Winkelsensors des Elektromotors.

Zwischen erstem Kupplungsteil 1 und zweitem Kupplungsteil 2 ist ein Zwischenteil 3 angeordnet, welches in Umfangsrichtung formschlüssig mit jedem der Kupplungsteile (1, 2) verbunden ist.

Das erste Kupplungsteil 1 weist an seinem vom zweiten Kupplungsteil 2 axial abgewandten axialen Endbereich ein Außengewinde 4 auf, welches in ein entsprechendes Innengewinde der Rotorwelle einschraubbar ist. Außerdem weist das erste Kupplungsteil 1 an seinem axialen Endbereich insbesondere axial zwischen dem Außengewinde 4 und einem radial am ersten Kupplungsteil 1 hervorstehenden Kragenbereich, insbesondere Flanschbereich, einen Außenkonus 5, insbesondere einen außenkonusförmigen Bereich, auf, welcher das erste Kupplungsteil 1 an der Rotorwelle zentriert, indem der Außenkonus 5 an einem entsprechenden, insbesondere also denselben Konuswinkel aufweisenden, Innenkonus der Rotorwelle anliegt.

Ebenso weist das zweite Kupplungsteil 2 ein Innengewinde 31 auf, in welches ein entsprechendes Außengewinde der Sensorwelle einschraubbar ist.

Dabei weist die Sensorwelle auch einen außenkonusförmigen Bereich auf, welcher an dem Innenkonus 30, insbesondere innenkonusförmigen Bereichs, des zweiten Kupplungsteils anliegt.

Auf diese Weise ist das erste Kupplungsteil 1 wellenzentriert zur Rotorwelle vorsehbar.

Ebenso ist das zweite Kupplungsteil 2 zur Sensorwelle wellenzentriert vorsehbar.

Das Zwischenteil weist eine Ringscheibe auf, deren Ringachse koaxial zur Drehachse der Rotorwelle und zur Sensorwelle ausrichtbar ist.

In Umfangsrichtung regelmäßig voneinander beabstandete Bolzen 20 sind alle auf demselben Radialabstand angeordnet. Die Bolzen 20 stehen axial beidseitig hervor und sind in Ausnehmungen der an den beiden Kupplungsteilen (1, 2) radial hervorstehenden Kragenbereiche eingepresst.

Somit ist das Zwischenteil 3 mit beiden Kupplungsteilen (1, 2) in Umfangsrichtung formschlüssig verbunden.

Die Ausnehmungen sind axial durchgehend durch die Kragenbereiche ausgeführt. Außerdem sind die Ausnehmungen in Umfangsrichtung regelmäßig beabstandet.

Die Kupplungsteile (1, 2) sind aus Stahl ausgeführt.

Am zweiten Kupplungsteil 2 ist ein Außensechskant 6 ausgeführt, so dass die aus den Kupplungsteilen (1, 2) und dem Zwischenteil 3 vormontierte Kupplung mittels eines Werkzeugs mit dem Außengewinde 4 des ersten Kupplungsteils 1 in die Rotorwelle einschraubbar ist.

Mittels des Zwischenteils 3 sind somit Drehmomentrucke oder Stöße abdämpfbar.

Der Kragenbereich ist vorzugsweise als zylindrische Scheibe ausgeführt. Die beiden Kragenbereiche der beiden Kupplungsteile (1, 2) stehen sich axial gegenüber und sind das Zwischenteil 3 direkt zwischengeordnet. Dabei endet das zum zweiten Kupplungsteil 2 hin gerichtete Ende des ersten Kupplungsteils 1 an einer einzigen axialen Position, an welcher die Zwischenscheibe 3 anliegt.

Bei weiteren erfindungsgemäßen Ausführungsbeispielen ist die Sensorwelle als Hohlwelle ausgeführt und mit ihrem außenkonusförmigen Bereich an den innenkonusförmigen Bereich angelegt. Dabei weist die Hohlwelle aber kein Außengewinde auf, sondern eine Schraube ist von dem vom Zwischenteil abgewandten Ende der Hohlwelle her durch die Hohlwelle durchgeführt und mit ihrem Außengewindebereich in das Innengewinde 31 eingeschraubt. Auf diese Weise ist die Hohlwelle dann vom Schraubenkopf der Schraube an das zweite Kupplungsteil 2 andrückbar.

Der Winkelsensor dient zur Erfassung der Winkelstellung der Rotorwelle. Das Gehäuse des Winkelsensors ist mittels einer Drehmomentstütze mit dem Gehäuse des Elektromotors drehfest verbunden.

Bei weiteren erfindungsgemäßen Ausführungsbeispielen weist der Elektromotor einen Lagerflansch auf, welches mit dem Stator des Elektromotors verbunden ist und ein Lager aufnimmt, mittels dessen die Rotorwelle drehbar gelagert ist.

Am Lagerflansch ist auf dessen der Bremse zugewandten Seite eine Bremsfläche ausgebildet.

Auf die Rotorwelle ist ein Mitnehmer aufgesteckt, welcher drehfest mit der Rotorwelle verbunden ist, insbesondere formschlüssig drehfest mit der Rotorwelle 15 verbunden ist. Der Mitnehmer ist ringartig ausgeführt ist mittels einer Passfederverbindung mit der Rotorwelle drehfest verbunden, insbesondere unter Verwendung einer zwischen Rotorwelle und Mitnehmer zwischengeordneten Passfeder.

Der Mitnehmer weist eine Außenverzahnung auf. Insbesondere erstreckt sich diese Außenverzahnung in axialer Richtung, also parallel zur Drehachse der Rotorwelle.

Auf den Mitnehmer ist ein Bremsbelagträger aufgeschoben, welcher hohl ausgeführt ist und an seiner Innenseite eine Innenverzahnung aufweist, welche mit der Außenverzahnung im Eingriff ist. Somit ist der Bremsbelagträger drehfest, aber axial verschiebbar, mit der Rotorwelle verbunden.

Ein Magnetkörper ist mit dem Lagerflansch drehfest verbunden, insbesondere schraubverbunden. Der Magnetkörper weist eine ringförmige umlaufende Ausnehmung auf, in welcher eine elektrisch bestrombare Wicklung aufgenommen ist.

Die Wicklung ist als Ringwicklung ausgeführt, wobei die Ringachse die Drehachse der Rotorwelle ist.

Eine Ankerscheibe ist drehfest aber axial verschiebbar mit dem Magnetkörper verbunden. Ein am Magnetkörper abgestütztes Federteil drückt auf die Ankerscheibe, so dass bei Bestromung der Wicklung die Ankerscheibe die von dem Federteil erzeugte Federkraft überwindend zum Magnetkörper, insbesondere zur Wicklung hingezogen wird, so dass die Bremse gelüftet wird.

Bei Nicht-Bestromung der Wicklung drückt das Federteil die Ankerscheibe zum Bremsbelagträger hin, so dass dieser auf die am Lagerflansch ausgebildete Bremsfläche gedrückt wird. Somit wird dann der axial beidseitig mit Bremsbelägen versehene Bremsbelagträger zwischen Ankerscheibe und Bremsfläche in Reibkontakt gebracht, so dass die Bremse also bei Nichtbestromung einfällt.

Beim Lüften und auch beim Einfallen der Bremse wird ein Drehmomentruck in die Rotorwelle eingetragen. Aber auch lastseitig ist eine Belastung, wie Drehmomentruck und/oder Quermoment, eintragbar.

Um dem Winkelsensor die Erfassung der Winkellage der Rotorwelle möglichst ungestört zu überlassen, ist die Kupplung daher erfindungsgemäß zwischen Rotorwelle und dem Sensor angeordnet.

### Bezugszeichenliste

1 erstes Kupplungsteil
2 zweites Kupplungsteil
3 Zwischenteil
4 Außengewinde
5 Außenkonus, insbesondere außenkonusförmiger Bereich
6 Außensechskant
20 Bolzen
30 Innenkonus, insbesondere innenkonusförmiger Bereich
31 Innengewinde

## Patentansprüche

1. **Elektromotor mit Rotorwelle, Winkelsensor und Kupplung,**
wobei die Kupplung ein erstes Kupplungsteil (1), ein zweites Kupplungsteil (2) und ein Zwischenteil (3) aufweist,
**wobei das erste Kupplungsteil** (1) **mit der Rotorwelle drehfest verbunden ist,**
**wobei das zweite Kupplungsteil** (2) **mit der Sensorwelle des Winkelsensors** drehfest verbunden ist,
wobei das Zwischenteil (3) mit dem ersten Kupplungsteil (1) als auch mit dem zweiten Kupplungsteil (2) in Umfangsrichtung formschlüssig verbunden ist,
**dadurch gekennzeichnet, dass** das Zwischenteil (3) **als Scheibe mit axial durchgehenden Ausnehmungen gefertigt ist,** und
jedes der Kupplungsteile (1,2) einen jeweiligen Kragenbereich aufweist, der am jeweiligen Kupplungsteil (1, 2) radial hervorsteht und Ausnehmungen aufweist,
**wobei axial ausgerichtete Bolzen** (20) **durch die Ausnehmungen** des Zwischenteils (3) **gesteckt** sind, **axial beidseitig aus dem Zwischenteil** (3) herausragen und in die Ausnehmungen des jeweiligen Kragenbereichs der Kupplungsteile (1, 2) zumindest teilweise hineinragen,
**wobei zumindest** die **die Ausnehmungen** des jeweiligen **Kragenbereichs hineinragende** Oberflächenbereiche **der Bolzen** (20) **mit einer Kunststoffschicht, insbesondere PEEK-Schicht oder Teflonschicht, überzogen** sind,
**wobei** die Bolzen (20) **und/oder das Zwischenteil** (3) **aus Stahl gefertigt sind.**

2. Elektromotor nach Anspruch 1
**dadurch gekennzeichnet, dass**
**die Ausnehmungen** des Zwischenteils (3) und des jeweiligen Kragenbereichs der Kupplungsteile (1,2) **jeweils auf demselben Radialabstand angeordnet sind und in Umfangsrichtung voneinander regelmäßig beabstandet** sind.

3. Elektromotor nach mindestens einem der vorangegangenen Ansprüche,
**dadurch gekennzeichnet, dass**
das Zwischenteil (3) eine diskrete Drehsymmetrie aufweist, insbesondere um die Drehachse eines der Kupplungsteile (1, 2), der Rotorwelle und/oder der Sensorwelle aufweist.

4. Elektromotor nach mindestens einem der vorangegangenen Ansprüche,
**dadurch gekennzeichnet, dass**
die Scheibe (3) als Zylinderscheibe ausgeführt ist, deren Zylinderachse koaxial zur Drehachse der Rotorwelle oder Sensorwelle ausgerichtet ist.

5. Elektromotor nach Anspruch 4,
**dadurch gekennzeichnet, dass**
die Kragenbereiche ringscheibenartig ausgeformt sind, insbesondere wobei der jeweils gleichem Radialabstand der Ausnehmungen der Kragenbereiche großer ist als der größte Radialabstand eines Außenkonus (5) des ersten Kupplungsteils (1) und als der größte Radialabstand eines Außengewindes (4) des ersten Kupplungsteils (1).

6. Elektromotor nach mindestens einem der vorangegangenen Ansprüche, **dadurch gekennzeichnet, dass**
die Bolzen (20) zylindrisch geformt sind.

7. Elektromotor nach mindestens einem der vorangegangenen Ansprüche, **dadurch gekennzeichnet, dass**
der Elektromotor eine elektromagnetisch betätigbare Bremse aufweist,
wobei ein Bremsbelagträger mit der Rotorwelle drehfest, aber axial verschiebbar verbunden ist,
wobei in einem Magnetkörper eine mit einem elektrischen Strom beaufschlagbare Wicklung, insbesondere Ringwicklung, aufgenommen ist,
wobei zwischen Bremsbelagträger und Wicklung eine mit dem Magnetkörper drehfest verbundene, aber axial verschiebbare Ankerscheibe, insbesondere ferromagnetische Ankerscheibe, angeordnet ist,
wobei ein am Magnetkörper abgestütztes Federteil die Ankerscheibe zum Bremsbelagträger hin drückt,
insbesondere so dass bei Bestromung der Wicklung die Ankerscheibe entgegen der Federkraft zur Wicklung und/oder zum Magnetkörper hingezogen wird und bei Nichtbestromung der Wicklung die Ankerscheibe auf den Bremsbelagträger drückt, so dass der Bremsbelagträger auf eine auf der von der Ankerscheibe abgewandten Seite des Bremsbelagträgers angeordnete Bremsfläche gedrückt wird.

8. Elektromotor nach mindestens einem der vorangegangenen Ansprüche, **dadurch gekennzeichnet, dass**
die Kupplung zwischen der Bremse und dem Sensor angeordnet ist.

## Claims

1. Electric motor comprising a rotor shaft, an angle sensor and a coupling,
the coupling having a first coupling part (1), a second coupling part (2) and an intermediate part (3),
the first coupling part (1) being connected to the rotor shaft for conjoint rotation,
the second coupling part (2) being connected to the sensor shaft of the angle sensor for conjoint rotation,
the intermediate part (3) being interlockingly connected to both the first coupling part (1) and the second coupling part (2) in the circumferential direction,
**characterised in that**
the intermediate part (3) is produced as a disc having axial through-openings, and each of the coupling parts (1, 2) has a respective collar region, which projects radially on each coupling part (1, 2) and has openings,
axially oriented bolts (20) being inserted through the openings in the intermediate part (3), protruding out of the intermediate part (3) axially on both sides and protruding into the openings in the respective collar region of the coupling parts (1, 2) at least in part,
at least the surface regions, which protrude into the openings in the respective collar region, of the bolts (20) being coated with a plastics layer, in particular a PEEK layer or Teflon layer, the bolts (20) and/or the intermediate part (3) being made of steel.

2. Electric motor according to claim 1,
**characterised in that**
the openings in the intermediate part (3) and in the respective collar region of the coupling parts (1, 2) are each arranged at the same radial distance and are arranged at a regular distance from one another in the circumferential direction.

3. Electric motor according to at least one of the preceding claims,
**characterised in that**
the intermediate part (3) has a discrete rotational symmetry, in particular about the axis of rotation of one of the coupling parts (1, 2), of the rotor shaft and/or of the sensor shaft.

4. Electric motor according to at least one of the preceding claims,
**characterised in that**
the disc (3) is configured as a cylindrical disc, the cylinder axis of which is oriented coaxially with the axis of rotation of the rotor shaft or sensor shaft.

5. Electric motor according to claim 4,
**characterised in that**
the collar regions are formed in the manner of an annular disc,
the radial distance of the openings in the collar regions, which in each case is the same, in particular being greater than the greatest radial distance of an external cone (5) of the first coupling part (1) and greater than the greatest radial distance of an external thread (4) of the first coupling part (1).

6. Electric motor according to at least one of the preceding claims,
**characterised in that**
the bolts (20) have a cylindrical shape.

7. Electric motor according to at least one of the preceding claims, **characterised in that** the electric motor comprises an electromagnetically operable brake,
a brake lining carrier being connected to the rotor shaft for conjoint rotation but so as to be axially displaceable,
a winding, in particular an annular winding, to which an electrical current can be applied being received in a magnetic member,
an armature disc, in particular a ferromagnetic armature disc, that is connected to the magnetic member for conjoint rotation but so as to be axially displaceable being arranged between the brake lining carrier and the winding,
a spring part supported on the magnetic member pushing the armature disc towards the brake lining carrier,
in particular such that when the winding is energised, the armature disc is pulled towards the winding and/or towards the magnetic member counter to the spring force, and when the winding is not energised, the armature disc pushes against the brake lining carrier such that the brake lining carrier is pushed onto a braking surface arranged on the side of the brake lining carrier facing away from the armature disc.

8. Electric motor according to at least one of the preceding claims, **characterised in that**
the coupling is arranged between the brake and the sensor.

## Revendications

1. Moteur électrique comprenant arbre de rotor, capteur d'angle et embrayage, l'embrayage présentant une première partie d'embrayage (1), une seconde partie d'embrayage (2) et une partie intermédiaire (3),
la première partie d'embrayage (1) étant reliée de manière solidaire en rotation à l'arbre de rotor,
la seconde partie d'embrayage (2) étant reliée de manière solidaire en rotation à l'arbre de capteur du capteur d'angle,
la partie intermédiaire (3) étant reliée par complémentarité de forme à la fois à la première partie d'embrayage (1) et à la seconde partie d'embrayage (2) dans la direction périphérique,
**caractérisé en ce que**
la partie intermédiaire (3) est fabriquée sous forme de disque comprenant des évidements axialement continus, et
chacune des parties d'embrayage (1, 2) présente une région formant collerette respective qui fait saillie radialement et présente des évidements au niveau de la partie d'embrayage (1, 2) respective,
des boulons (20) orientés axialement étant passés à travers les évidements de la partie intermédiaire (3), faisant saillie axialement des deux côtés de la partie intermédiaire (3) et faisant saillie au moins partiellement dans les évidements de la région formant collerette respective des parties d'embrayage (1, 2),
les régions superficielles des boulons (20) faisant saillie dans les évidements de la région formant collerette respective étant recouvertes d'une couche de plastique, en particulier d'une couche de PEEK ou d'une couche de téflon,
les boulons (20) et/ou la pièce intermédiaire (3) étant réalisés en acier.

2. Moteur électrique selon la revendication 1
**caractérisé en ce que**
les évidements de la partie intermédiaire (3) et de la région formant collerette respective des parties d'embrayage (1, 2) sont agencés respectivement avec le même espacement radial et sont espacés régulièrement les uns par rapport aux autres dans la direction périphérique.

3. Moteur électrique selon au moins l'une quelconque des revendications précédentes, **caractérisé en ce que**
la partie intermédiaire (3) présente une symétrie de rotation discrète, en particulier autour de l'axe de rotation d'une des parties d'embrayage (1, 2), de l'arbre de rotor et/ou de l'arbre de capteur.

4. Moteur électrique selon au moins l'une quelconque des revendications précédentes, **caractérisé en ce que**
le disque (3) est réalisé sous la forme d'un disque cylindrique dont l'axe de cylindre est orienté de manière coaxiale par rapport à l'axe de rotation de l'arbre de rotor ou de l'arbre de capteur.

5. Moteur électrique selon la revendication 4,
**caractérisé en ce que**
les régions formant collerette sont formées à la manière de disques annulaires, l'espacement radial respectivement identique des évidements des régions formant collerette étant en particulier supérieur au plus grand espacement radial d'un cône extérieur (5) de la première partie d'embrayage (1) et au plus grand espacement radial d'un filetage extérieur (4) de la première partie d'embrayage (1).

6. Moteur électrique selon au moins l'une quelconque des revendications précédentes, **caractérisé en ce que**
les boulons (20) sont formés de manière cylindrique.

7. Moteur électrique selon au moins l'une quelconque des revendications précédentes, **caractérisé en ce que**
le moteur électrique présente un frein à commande électromagnétique,
un support de garniture de frein étant relié à l'arbre de rotor de manière solidaire en rotation mais de manière à pouvoir coulisser axialement,
un enroulement, en particulier un enroulement annulaire, qui peut être soumis à un courant électrique étant accueilli dans un corps magnétique,
un disque d'induit, en particulier un disque d'induit ferromagnétique, relié de manière solidaire en rotation au corps magnétique de manière à pouvoir cependant coulisser axialement, étant agencé entre le support de garniture de frein et l'enroulement,
une partie ressort, en appui contre le corps magnétique, poussant le disque d'induit vers le support de garniture de frein,
en particulier de sorte que, lorsque l'enroulement est alimenté en courant, le disque d'induit est tiré à l'encontre de la force de ressort vers l'enroulement et/ou le corps magnétique et, lorsque l'enroulement n'est pas alimenté en courant, le disque d'induit appuie sur le support de garniture de frein de sorte que le support de garniture de frein est pressé sur une surface de frein agencée sur le côté du support de garniture de frein opposé au disque d'induit.

8. Moteur électrique selon au moins l'une quelconque des revendications précédentes, **caractérisé en ce que**
l'embrayage est agencé entre le frein et le capteur.
